# NEUE EUROPÄISCHE PATENTSCHRIFT

(11) **EP 1 693 237 B2**
(45) Veröffentlichungstag und Bekanntmachung des Hinweises auf die Entscheidung über den Einspruch: **25.09.2019**
(45) Hinweis auf die Patenterteilung: 25.09.2013
(21) Anmeldenummer: 06003293.5
(22) Anmeldetag: 17.02.2006
(51) Int. Cl.: B60J 10/18, B60R 13/04, B60R 13/06, F16B 5/12

(54) **Metallband als Einlage für Zier- oder Dichtstreifen**
Metallic insert band for trimming and sealing strips
Lame métallique d'insertion pour bandes d'enjolivement et d'étanchéité

(30) Priorität: 22.02.2005 DE 202005002832 U
(43) Veröffentlichungstag der Anmeldung: 23.08.2006
(73) Patentinhaber: BFC Fahrzeugteile GmbH, 74321 Bietigheim-Bissingen (DE)
(72) Erfinder: Wagner, Joachim, 74382 Neckarwestheim (DE)
(74) Vertreter: Manitz Finsterwald Patent- und Rechtsanwaltspartnerschaft mbB

(56) Entgegenhaltungen:
- EP-A1- 0 252 659
- EP-A1- 0 441 287
- EP-A1- 0 707 995
- EP-A2- 0 305 088
- AU-A- 4 099 485
- DE-T2- 69 501 998
- JP-A- 60 215 447
- US-A- 5 752 345

## Beschreibung

Die vorliegende Erfindung betrifft ein Metallband als Einlage für Zier- oder Dichtstreifen aus flexiblem Material, insbesondere Gummi oder Kunststoff, welches insbesondere zu einem Profil gebogen wird, mit einer Vielzahl von insbesondere periodisch in Längsrichtung des Bandes aufeinanderfolgenden, von einem Rand des Metallbandes quer zu seiner Längsrichtung nach innen geführten, keilförmigen oder innen keilförmig auslaufenden Schlitzen und in Längsrichtung zwischen aufeinanderfolgenden Randschlitzen angeordneten, ebenfalls quer zur Längsrichtung des Metallbandes verlaufenden, aber nicht bis zum Rand geführten Mittelschlitzen, die zu ihren beiden Enden hin in einer Spitze auslaufen.

Die EP 0 305 088 A2 und US 575 234 5 A zeigen Metallbänder nach dem Oberbegriff des Anspruchs 1.

Derartige Metallbänder werden insbesondere im Kraftfahrzeugbereich als Einlage für Dichtstreifen zum Abdichten von Motorraum-, Kofferraum- und Türöffnungen eingesetzt. Die kontinuierlich gefertigten Metallbänder sind mit Gummi und/oder flexiblem Kunststoff ummantelt und weisen Schlitze auf, unter anderem, um bei nicht haftmittelbeschichteten Metallbändern ein Durchdringen des Dichtmaterials zu ermöglichen, da die Haftung Gummi-Metall bzw. Kunststoff-Metall nicht möglich ist. Andererseits sind haftmittelbeschichtete Metallbänder sehr teuer. Vorteilhaft hergestellt werden können die Metallbänder durch rotatives Schneiden der Schlitze und anschließendes Walzstrecken des Metallbandes, nämlich abfalllos und mit hoher Fertigungsgeschwindigkeit.

Die Metallbänder werden vor oder nach dem Ummanteln mit dem Dichtmaterial zu einem meist U-förmigen Klemmprofil gebogen, welches auf die Dichtflansche der Öffnung geklemmt wird. Um dabei den Konturen der Öffnung folgen zu können, muss das Klemmprofil meist sowohl in horizontaler als auch in vertikaler Ebene flexibel sein. Zudem soll das Klemmprofil in longitudinaler Richtung stauchbar sein, da die abzudichtenden Öffnungen erhebliche Umfangstoleranzen aufweisen können und ein Ablängen des Dichtstreifens vor Ort äußerst aufwändig wäre. Dichtstreifen mit stauchbarem Klemmprofil können nämlich auf die maximal vorkommende Länge bevorzugt endlos gefertigt und beim Einbau auf die tatsächliche Länge gestaucht werden. Ein Zusammenkleben, -vulkanisieren oder dergleichen dieser Dichtstreifen muss daher nicht vor Ort geschehen, so dass der Dichtstreifeneinbau auch von Robotern durchgeführt werden kann.

Andererseits muss das Klemmprofil auch eine gewisse Zugfestigkeit aufweisen, da die Zier- oder Dichtleisten üblicherweise durch Extrudieren hergestellt werden, wobei erhebliche Kräfte in Längsrichtung des Bandes auftreten. Ein weiteres Erfordernis des Klemmprofils besteht darin, eine größtmögliche Klemmkraft auf die Dichtflansche auszuüben.

Klemmprofile der genannten Art werden hergestellt, indem das Metallband kontinuierlich einem Extruder zugeführt wird, in welchem sich das Dichtmaterial unter Druckeinwirkung um das Metallband legt, welches anschließend aus dem Extruder durch eine Öffnung herausgedrückt wird, deren Form entsprechend dem gewünschten Profil des Dichtstreifens gewählt ist. Am Auslauf der Extrusionslinie muss das fertige Klemmprofil maßgenau abgelängt werden. Dies erfolgt durch Trennverfahren wie Sägen, Schleifen, mechanisches Schneiden, Laser- oder Plasmaschneiden. Dabei besteht die Schwierigkeit, dass ein verhältnismäßig schnell aus dem Extruder kontinuierlich austretendes Klemmprofil in einem diskontinuierlichen Arbeitsgang abgelängt werden muss. Die zur Verfügung stehende Zeit zum Durchtrennen ist daher sehr kurz. Zudem müssen gleichzeitig Materialien mit verschiedenen Eigenschaften durchtrennt werden, so dass ein hoher Energieeintrag erforderlich ist.

Ein hoher Energieeintrag führt dazu, dass die das Metallband umgebenden Materialien wie Gummi, PVC und sonstige Dichtmassen beeinträchtigt werden und das Metallband zu stark freigelegt wird. Neben der optischen Abwertung des Produktes wird dadurch zum einen die Verletzungsgefahr erhöht und zum anderen das Zusammenvulkanisieren der beiden Enden des Dichtstreifens erschwert. Bei nicht oder schlecht vulkanisierten Dichtstreifen besteht die Gefahr, dass das Metallband korrodiert. Der Energieeintrag muss daher durch aufwändige Kühlung möglichst verringert werden.

Der Erfindung liegt die Aufgabe zugrunde, ein Metallband der eingangs genannten Art anzugeben, welches diese Nachteile nicht aufweist. Insbesondere soll das Ablängen erleichtert und mit geringem Energieeintrag ermöglicht werden.

Diese Aufgabe wird durch die kennzeichnenden Merkmale des Anspruchs 1 gelöst.

Durch das Vorsehen von zusätzlichen Durchtrennungen des Metallbandes ergeben sich bei den betroffenen Mittelschlitzen verkürzte Schnittlängen.

Der notwendige Energieeintrag zum Durchtrennen des Metallbandes an diesen Stellen ist daher verringert. Die Anordnung der zusätzlichen Durchtrennungen bei den Mittelschlitzen hat zudem den Vorteil, dass die bevorzugten Trennstellen leicht aufgefunden werden können. Bei einem automatisch durchgeführten Trennvorgang ist es daher möglich, diesen jeweils an den Stellen durchzuführen, an denen nur eine geringe Schnittlänge erforderlich ist. Ein weiterer Vorteil dieser Anordnung der zusätzlichen Durchtrennungen besteht darin, dass sich keine unfallträchtigen spitzen Endabschnitte beim Schneiden des Klemmprofils ergeben, sondern auf beiden Seiten eine gerade Schnittlinie entsteht.

Bevorzugt sind die zusätzlichen Durchtrennungen bei jedem Mittelschlitz vorgesehen. Eine vorteilhafte Durchtrennung des Klemmprofils kann dadurch in kurzen Abständen erfolgen, so dass die gewünschte Länge des Klemmprofils besser eingehalten werden kann.

Bevorzugt sind zusätzliche Durchtrennungen von beiden Rändern aus vorgesehen. Die verbleibende Schnittlänge kann dadurch weiter verringert werden.

Um möglichst wenig Energie eintragen zu müssen, sind die zusätzlichen Durchtrennungen so vorgesehen, dass ein nur kurzer, nicht durchtrennter Bereich zwischen diesen und den Mittelschlitzen verbleibt. Die genannten Vorteile des erfindungsgemäßen Metallbandes können dadurch weiter vergrößert werden.

Besonders bevorzugt weisen die nicht durchtrennten Bereiche zwischen den zusätzlichen Durchtrennungen und den gegenüberliegenden Spitzen der Mittelschlitze weniger als 0,5 cm auf. Mit derart kurzen nicht durchtrennten Bereichen konnten sehr gute Ergebnisse erzielt werden.

Die Randschlitze sind insbesondere paarweise angeordnet, indem jeweils zwei Randschlitze einander gegenüberliegend von den beiden Rändern des Metallbandes nach innen geführt sind. Hierdurch ergibt sich ein flexibles Band mit hoher Klemmkraft.

Nach einer Ausgestaltung der Erfindung sind die Mittelschlitze symmetrisch zur Mittellängsachse des Metallbandes angeordnet. Das Klemmprofil erhält dadurch eine in beiden horizontalen Richtungen gleiche Flexibilität.

Bei symmetrisch zur Mittellängsachse des Metallbandes angeordneten Mittelschlitzen sind diese bevorzugt so lang ausgebildet, dass sie bei einem U-förmig gebogenen Profil bis in dessen Schenkel reichen. Die Flexibilität des Klemmprofils in den beiden horizontalen Richtungen weist dadurch eine vorteilhafte Größe auf.

Die Erstreckung der Mittelschlitze in die Schenkel des U-Profils ist im Verhältnis zu ihrer Länge bevorzugt kurz. Damit ist eine hohe Klemmkraft des Profils sichergestellt.

Nach einer anderen Ausgestaltung der Erfindung sind die Mittelschlitze symmetrisch zu einer zur Mittellängsachse des Metallbandes parallelen Achse angeordnet. Hierdurch ergibt sich ein Klemmprofil, welches in einer horizontalen Richtung eine höhere Flexibilität aufweist als in der anderen Richtung. Durch diese bevorzugte Biegbarkeit kann vorteilhafterweise ein fehlerhafter Einbau des Klemmprofils verhindert werden.

Bei einer derart asymmetrischen Anordnung der Mittelschlitze sind diese bevorzugt so kurz ausgebildet, dass sie nur in einen Schenkel des U-Profils reichen. Zum einen wird dadurch die Klemmkraft erhöht und zum anderen ist der Unterschied in der Flexibilität in den beiden horizontalen Biegerichtungen groß und dadurch leicht feststellbar.

Die Randschlitze und Mittelschlitze sind insbesondere in Querrichtung des Metallbandes überlappend ausgebildet. Hierdurch ergibt sich eine hohe Flexibilität und Stauchbarkeit des Klemmprofils.

Bevorzugt überlappen sich die Randschlitze und die Mittelschlitze nur geringfügig. Eine zu hohe Flexibilität und damit eine zu geringe Zugfestigkeit kann dadurch verhindert werden.

Die Herstellung der Randschlitze und der Mittelschlitze erfolgt durch Schneiden und anschließendes Aufweiten durch Walzstrecken. Damit können sehr hohe Fertigungsgeschwindigkeiten erreicht werden. Zudem ist die Herstellung abfalllos möglich, und die Öffnungsweite der Schlitze kann nach Bedarf variiert werden. Auch können Abmessungen wie Länge der Schlitze, Stegbreite, Zahnbreite und Bandbreite problemlos eingestellt werden.

Die zusätzlichen Durchtrennungen sind nicht aufgeweitet. Da die zusätzlichen Durchtrennungen nur für den Trennvorgang benötigt werden, ist eine Aufweitung nicht erforderlich. Andererseits ist durch Unterlassen des Aufweitens der Durchtrennungen eine Erhöhung der Klemmkraft gegeben.

Ausführungsbeispiele der Erfindung sind in den Zeichnungen dargestellt und werden nachfolgend beschrieben. Es zeigen, jeweils in schematischer Darstellung:
- Fig. 1: eine erste Variante eines erfindungsgemäßen Metallbandes in Draufsicht,
- Fig. 2: eine zweite Variante eines erfindungsgemäßen Metallbandes in Draufsicht, und
- Fig. 3: eine perspektivische Ansicht eines Klemmprofils mit erfindungsgemäßem Metallband und Trennscheibe zum Durchtrennen des Profils.

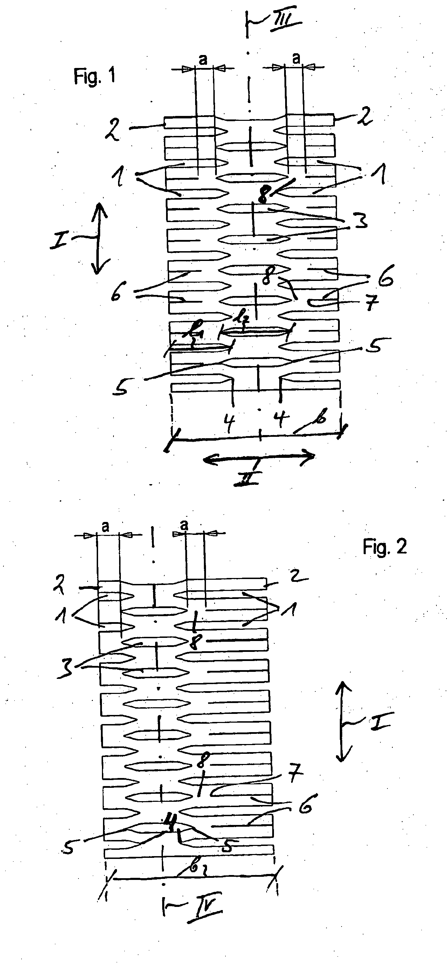

Das in Fig. 1 dargestellte Metallband, das als Einlage für Zier- oder Dichtstreifen aus flexiblem Material, insbesondere Gummi oder Kunststoff, verwendet werden kann, weist eine Vielzahl von periodisch in Längsrichtung l des Bandes aufeinanderfolgenden Randschlitzen 1 auf, die paarweise einander gegenüberliegend von den beiden Rändern 2 des Metallbandes nach innen geführt sind. Die Randschlitze 1 weisen eine Länge l₁ auf, die etwa drei Achtel der Breite b des Metallbandes entspricht. Zwischen jeweils zwei aufeinanderfolgenden Paaren von Randschlitzen 1 weist das Metallband des weiteren jeweils einen Mittelschlitz 3 auf, dessen Länge l₂ etwa die Hälfte der Bandbreite b beträgt. Dadurch überlappen die Mittelschlitze 3 in Querrichtung II des Metallbandes mit den Randschlitzen 1 geringfügig, nämlich um etwa ein Zwölftel der Breite b.

Die Randschlitze 1 und die Mittelschlitze 3 sind durch Schneiden und Walzstrecken hergestellt und dadurch in Längsrichtung l des Metallbandes aufgeweitet. Die Randschlitze 1 weisen eine bandinnenseitig in einer Keilspitze 4 auslaufende Form auf, während die Mittelschlitze 3 zu den beiden Rändern des Metallbandes hin jeweils in einer Keilspitze 5 auslaufen.

Zusätzlich zu den Randschlitzen 1 und den Mittelschlitzen 3 ist das Metallband mit quer zur Längsrichtung l des Metallbandes verlaufenden Durchtrennungen 6 versehen, die ebenfalls durch Schneiden hergestellt, aber nicht aufgeweitet sind und jeweils von einem Rand 2 des Metallbandes in Richtung auf die dem Rand 2 gegenüberliegende Keilspitze 5 eines Mittelschlitzes 3 verlaufen. Zwischen dem bandinnenseitigen Ende 7 der Durchtrennungen 6 und der jeweils gegenüberliegenden Keilspitze 5 der Mittelschlitze 3 befindet sich jeweils ein nur kurzer, nicht durchtrennter Bereich 8. Insbesondere weist dieser Bereich eine Erstreckung a in Querrichtung II des Metallbandes von weniger als 0,5 cm, im dargestellten Ausführungsbeispiel von ca. 0,4 cm auf.

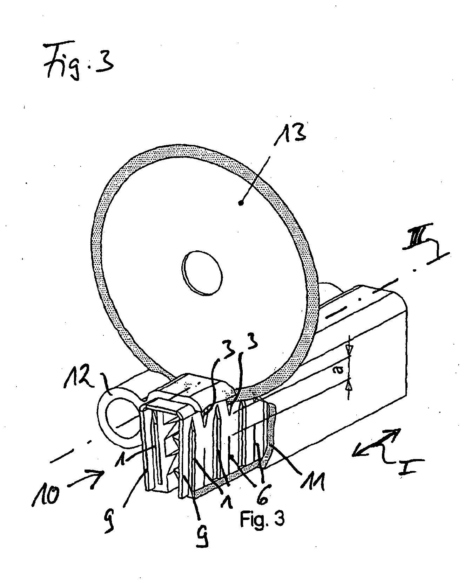

Die Mittelschlitze 3 sind bei dem Ausführungsbeispiel von Fig. 1 symmetrisch zur Mittellängsachse III des Metallbandes angeordnet. Wie in Fig. 3 dargestellt, ist ihre Länge l₂ so groß gewählt, dass die Mittelschlitze 3 bis in die Schenkel 9 des aus dem Metallband gebildeten U-Profils 10 reichen. Die Erstreckung der Mittelschlitze 3 in die Schenkel 9 des U-Profils 10 ist aber nur kurz im Verhältnis zu ihrer Länge l₂.

Bei dem in Fig. 2 dargestellten Ausführungsbeispiel sind die Mittelschlitze 3 nicht symmetrisch zur Mittellängsachse III des Metallbandes, sondern zu einer hierzu parallelen Längsachse IV angeordnet. Die Randschlitze 1 weisen auch bei diesem Ausführungsbeispiel eine solche Länge l₁ auf, dass sich die Randschlitze mit den Mittelschlitzen 3 nur geringfügig in Querrichtung II des Metallbandes überlappen. Dementsprechend weisen die sich vom in Fig. 2 linken Rand zum Bandinneren erstreckenden Randschlitze 1 eine geringere Länge auf als die sich vom in Fig. 2 rechten Rand zum Bandinneren erstreckenden Randschlitze 1. Die Größe der Überlappung entspricht derjenigen des Ausführungsbeispiels von Fig. 1.

Des weiteren sind bei diesem Ausführungsbeispiel Durchtrennungen 6 nur auf der Seite der langen Randschlitze 1 des Metallbandes vorgesehen, also nur ausgehend vom rechten Rand in Fig. 2. Der nicht durchtrennte Bereich 8 zwischen den bandinnenseitigen Enden 7 und der jeweils gegenüberliegenden Keilspitze 5 der Mittelschlitze 3 weist auch hier eine nur kurze Länge a von bevorzugt weniger als 0,5 cm, insbesondere gemäß dem Ausführungsbeispiel von ca. 0,4 cm auf. Aufgrund der asymmetrischen Anordnung der Mittelschlitze 3 weist der Abstand der anderen Keilspitzen 5 der Mittelschlitze 3 vom linken Rand 2 des Metallbandes ebenfalls nur eine geringe Größe auf, insbesondere im dargestellten Ausführungsbeispiel von ca. 0,5 cm. Auch ohne Durchtrennungen auf der linken Seite des Metallbandes ergeben sich daher die geschilderten Vorteile beim Ablängen dieses Metallbandes. Es ist aber auch bei einer asymmetrischen Anordnung der Mittelschlitze 3 möglich, Durchtrennungen 6 auf beiden Seiten des Metallbandes, also ausgehend von beiden Rändern 2 vorzusehen.

Fig. 3 zeigt das Durchtrennen eines mit einem erfindungsgemäßen Metallband ausgestatteten Klemmprofils. Das Metallband ist zu einem U-Profil 10 gebogen und mit einem Dichtmaterial 11 ummantelt. Außerdem weist das Klemmprofil eine Dichtlippe 12 auf.

Zum Durchtrennen des Klemmprofils wird in dem dargestellten Beispiel eine Trennscheibe 13 verwendet, deren Antrieb nicht dargestellt ist. Die Trennscheibe kann automatisch bei einem der Mittelschlitze 3 positioniert werden. Dadurch kann eine Durchtrennung des Klemmprofils an einer Stelle erfolgen, an welcher nur kurze nicht durchtrennte Bereiche, nämlich die Bereiche 8 zwischen den Keilspitzen 5 des Mittelschlitzes 3 und den beiden gegenüberliegenden Durchtrennungen 6 vorhanden sind. Diese Bereiche 8 weisen eine nur kurze Länge a von ca. 0,4 cm auf. Es ist daher ein nur geringer Energieeintrag zum Durchtrennen des Klemmprofils erforderlich, wodurch sich eine geringe Beeinträchtigung des Klemmprofils ergibt. Zudem können beim Durchtrennen des Klemmprofils im Bereich eines Mittelschlitzes 3 glatte Schnittflächen erhalten werden.

### Bezugszeichenliste

- 1: Randschlitz
- 2: Rand
- 3: Mittelschlitz
- 4: Spitze von 1
- 5: Spitze von 3
- 6: Durchtrennung
- 7: Ende von 6
- 8: nicht durchtrennter Bereich
- 9: Schenkel von 10
- 10: U-Profil
- 11: Ummantelung
- 12: Dichtlippe
- 13: Trennscheibe

- a: Länge von 8
- b: Breite des Metallbandes
- l₁: Länge von 1
- l₂: Länge von 3

- I: Längsrichtung des Metallbandes
- II: Querrichtung des Metallbandes
- III: Mittellängsachse des Metallbandes
- IV: Parallelachse zu III

## Patentansprüche

1. Metallband als Einlage für Zier- oder Dichtstreifen aus flexiblem Material, insbesondere Gummi oder Kunststoff, welches insbesondere zu einem Profil (10) gebogen wird, mit einer Vielzahl von insbesondere periodisch in Längsrichtung (l) des Bandes aufeinanderfolgenden, von einem Rand (2) des Metallbandes quer zu seiner Längsrichtung (l) nach innen geführten, keilförmigen oder innen keilförmig auslaufenden Randschlitzen (1) und in Längsrichtung (l) zwischen aufeinanderfolgenden Randschlitzen (1) angeordneten, ebenfalls quer zur Längsrichtung (l) des Metallbandes verlaufenden, aber nicht bis zum Rand (2) geführten Mittelschlitzen (3), die zu ihren beiden Enden hin in einer Spitze (5) auslaufen, wobei die Randschlitze (1) und die Mittelschlitze (3) geschnitten und durch Walzstrecken aufgeweitet sind,
**dadurch gekennzeichnet,**
**dass** das Metallband zusätzlich zu den Randschlitzen (1) und den Mittelschlitzen (3) quer zur Längsrichtung (l) des Metallbandes verlaufende, durch Schneiden hergestellte, nicht aufgeweitete Durchtrennungen (6) aufweist, die bei mindestens einem Teil der Mittelschlitze (3) vorgesehen sind und von mindestens einem Rand (2) des Metallbandes in Richtung auf die dem Rand (2) gegenüberliegende Spitze (5) des jeweiligen Mittelschlitzes (3) verlaufen, wobei zwischen dem inneren Ende (7) der Durchtrennungen (6) und der jeweils gegenüberliegenden Spitze (5) der Mittelschlitze (3) ein nur kurzer, nicht durchtrennter Bereich (8) vorhanden ist.

2. Metallband nach Anspruch 1,
**dadurch gekennzeichnet,**
**dass** bei jedem Mittelschlitz (3) Durchtrennungen (6) vorgesehen sind.

3. Metallband nach Anspruch 1 oder 2,
**dadurch gekennzeichnet,**
**dass** Durchtrennungen (6) von beiden Rändern (2) ausgehend vorgesehen sind.

4. Metallband nach einem der vorhergehenden Ansprüche,
**dadurch gekennzeichnet,**
**dass** der nicht durchtrennte Bereich (8) eine Länge (a) von weniger als 0,5 cm aufweist, insbesondere ca. 0,4 cm.

5. Metallband nach einem der vorhergehenden Ansprüche,
**dadurch gekennzeichnet,**
**dass** die Randschlitze (1) paarweise angeordnet sind, indem jeweils zwei Randschlitze (1) einander gegenüberliegend von den beiden Rändern (2) des Metallbandes nach innen geführt sind.

6. Metallband nach einem der vorhergehenden Ansprüche,
**dadurch gekennzeichnet,**
**dass** die Mittelschlitze (3) symmetrisch zur Mittellängsachse (III) des Metallbandes angeordnet sind, wobei die Mittelschlitze (3) bevorzugt eine solche Länge (l₂) aufweisen, dass sie bei einem U-förmig gebogenen Profil (10) bis in dessen Schenkel (9) reichen, und wobei weiter bevorzugt die Mittelschlitze (3) nur ein im Verhältnis zu ihrer Länge (l₂) kurzes Stück in die Schenkel (9) reichen.

7. Metallband nach einem der Ansprüche 1 bis 5,
**dadurch gekennzeichnet,**
**dass** die Mittelschlitze (3) symmetrisch zu einer zur Mittellängsachse (III) des Metallbandes parallelen Achse (IV) angeordnet sind, wobei die Länge (l₂) der Mittelschlitze (3) bevorzugt so kurz gewählt ist, dass die Mittelschlitze (3) nur in einen Schenkel (9) des Profils (10) reichen.

8. Metallband nach einem der vorhergehenden Ansprüche,
**dadurch gekennzeichnet,**
**dass** die Randschlitze (1) und die Mittelschlitze (3) einander in Querrichtung (II) des Metallbandes überlappend ausgebildet sind, wobei die Randschlitze (1) und die Mittelschlitze (3) bevorzugt einander nur geringfügig überlappen.

## Claims

1. A metal band as an inlay for trim strips or sealing strips of flexible material, in particular of rubber or plastic, which is in particular bent to form a section (10), having a plurality of marginal slots (1) which are in particular periodically sequential in the longitudinal direction (l) of the band, which are guided inwardly from a margin (2) of the metal band transversely to its longitudinal direction (l), which are wedge shaped or which run out inwardly in wedge shape; and having central slots (3) which run out to a tip (5) toward their two ends, which are arranged between sequential marginal slots (1) in the longitudinal direction (l), which likewise extend transversely to the longitudinal direction (l) of the metal band, but are not guided up to the margin (2), wherein the marginal slots (1) and the central slots (3) are cut and are widened by stretch rolling,
**characterized in that**
the metal band has, in addition to the marginal slots (1) and to the central slots (3), throughcuts (6) which extend transversely to the longitudinal direction (l) of the metal band, which are produced by cutting, which are not widened and which are provided at at least some of the central slots (3) and extend from at least one margin (2) of the metal band in the direction toward the tip (5) of the respective central slot (3) disposed opposite the margin (2), with an only short, non-throughcut region (8) being present between the inner end (7) of the throughcuts (6) and the respective oppositely disposed tip (5) of the central slots (3).

2. A metal band in accordance with claim 1,
**characterized in that**
throughcuts (6) are provided at each central slot (3).

3. A metal band in accordance with claim 1 or claim 2,
**characterized in that**
throughcuts (6) are provided starting from both margins (2).

4. A metal band in accordance with any one of the preceding claims,
**characterized in that**
the non-throughcut region (8) has a length (a) of less than 0.5 cm, in particular approximately 0.4 cm.

5. A metal band in accordance with any one of the preceding claims,
**characterized in that**
the marginal slots (1) are arranged in pairs **in that** two respective marginal slots (1) are inwardly guided from the two margins (2) of the metal band in a manner disposed opposite one another.

6. A metal band in accordance with any one of the preceding claims,
**characterized in that**
the central slots (3) are arranged symmetrically with respect to the central longitudinal axis (III) of the metal band, with the central slots (3) preferably having such a length (l₂) that, with a section (10) bent into U shape, they extend up to and into its limb (9), and with further preferably the central slots (3) only extending into the limb (9) a short way in relation to their length (l₂).

7. A metal band in accordance with any one of the claims 1 to 5,
**characterized in that**
the central slots (3) are arranged symmetrically with respect to an axis (IV) in parallel with the central longitudinal axis (III) of the metal band, with the length (l₂) of the central slots (3) preferably being selected as so short that the central slots (3) only extend into one limb (9) of the section (10).

8. A metal band in accordance with any one of the preceding claims,
**characterized in that**
the marginal slots (1) and the central slots (3) are configured as overlapping one another in the transverse direction (II) of the metal band, with the marginal slots (1) and the central slots (3) preferably only overlapping one another slightly.

## Revendications

1. Ruban métallique à titre d'insert pour bande enjoliveuse ou d'étanchéité en matériau flexible, en particulier en caoutchouc ou en matière plastique, qui est cintré en particulier en un profilé (10) avec une pluralité de fentes de bordure (1) successives, agencées en particulier périodiquement en direction longitudinale (l) du ruban, partant d'une bordure (2) du ruban métallique et menées vers l'intérieur transversalement à sa direction longitudinale (l), en forme de coin ou se terminant à l'intérieur en forme de coin, et une pluralité de fentes médianes (3) agencées entre des fentes de bordure successives (1) en direction longitudinale (l), s'étendant également transversalement à la direction longitudinale (l) du ruban métallique mais sans être menées jusqu'à la bordure (2), lesdites fentes médianes se terminant à leurs deux extrémités par une pointe (5), dans lequel les fentes de bordure (1) et les fentes médianes (3) sont taillées et élargies par laminage-étirage,
**caractérisé en ce que**
en plus des fentes de bordure (1) et des fentes médianes (3), le ruban métallique comporte des traversées (6) non élargies, s'étendant transversalement à la direction longitudinale (l) du ruban métallique et produites par découpe, qui sont prévues pour au moins une partie des fentes médianes (3) et qui s'étendent depuis au moins une bordure (2) du ruban métallique en direction de la pointe (5), opposée à la bordure (2), de la fente médiane respective (3) et **en ce qu'**il existe une région (8) non traversée seulement courte entre l'extrémité intérieure (7) des traversées (6) et la pointe respectivement opposée (5) des fentes médianes (3).

2. Ruban métallique selon la revendication 1,
**caractérisé en ce que** des traversées (6) sont prévues pour chaque fente médiane (3).

3. Ruban métallique selon la revendication 1 ou 2,
**caractérisé en ce que** des traversées (6) sont prévues en partant des deux bordures (2).

4. Ruban métallique selon l'une des revendications précédentes,
**Caractérisé en ce que** ladite région (8) non traversée a une longueur (a) de moins de 0,5 cm, en particulier d'environ 0,4 cm.

5. Ruban métallique selon l'une des revendications précédentes,
**caractérisé en ce que** les fentes de bordure (1) sont agencées par paires, du fait que deux fentes de bordure (1) mutuellement opposées sont menées vers l'intérieur depuis les deux bordures (2) du ruban métallique.

6. Ruban métallique selon l'une des revendications précédentes,
**caractérisé en ce que** les fentes médianes (3) sont agencées symétriquement par rapport à l'axe longitudinal médian (III) du ruban métallique, dans lequel les fentes médianes (3) ont de préférence une longueur (l₂) telle que, dans un profilé (10) cintré en forme de U, elles s'étendent jusque dans les branches (9) de celui-ci, et dans lequel de préférence les fentes médianes (3) ne s'étendent jusque dans les branches (9) que sur une courte distance en relation à leur longueur (l₂).

7. Ruban métallique selon l'une des revendications 1 à 5,
**caractérisé en ce que** les fentes médianes (3) sont agencées symétriquement par rapport à un axe (IV) parallèle à l'axe longitudinal médian (III) du ruban métallique, et la longueur (l₂) des fentes médianes (3) est choisie de préférence aussi courte que les fentes médianes (3) ne s'étendent que dans une seule branche (9) du profilé (10).

8. Ruban métallique selon l'une des revendications précédentes,
**caractérisé en ce que** les fentes de bordure (1) et les fentes médianes (3) sont réalisées de manière à se chevaucher mutuellement en direction transversale (II) du ruban métallique, dans lequel les fentes de bordure (1) et les fentes médianes (3) se chevauchent de préférence mutuellement seulement légèrement.
